# EUROPEAN PATENT SPECIFICATION

(11) **EP 3 640 441 B1**
(45) Date of publication and mention of the grant of the patent: **07.09.2022**
(21) Application number: 19215881.4
(22) Date of filing: 14.07.2015
(51) Int. Cl.: F01M 1/02, F01M 1/16, F16N 7/38, F16N 13/04, F16N 13/16, F16N 29/02, F01M 1/08

(54) **A METHOD FOR LUBRICATING LARGE SLOW RUNNING TWO-STROKE DIESEL ENGINES**
VERFAHREN ZUR SCHMIERUNG GROSSER LANGSAM LAUFENDER ZWEITAKTDIESELMOTOREN
PROCÉDÉ DE LUBRIFICATION DE GROS MOTEURS DIESEL LENTS À DEUX TEMPS

(30) Priority: 29.07.2014 DK PA201470464
(43) Date of publication of application: 22.04.2020
(62) Divisional of application: 15827709.5
(73) Proprietor: Hans Jensen Lubricators A/S, 9560 Hadsund (DK)
(72) Inventor: BAK, Peer, 9300 Sæby (DK)
(74) Representative: Patrade A/S

(56) References cited:
- EP-A1- 0 639 696
- EP-A1- 1 951 995
- EP-A2- 2 722 500
- EP-B1- 1 951 995
- DE-A1-102013 104 822
- DK-A- 201 300 272
- US-A1- 2010 006 056

## Description

### FIELD OF THE INVENTION

The present invention relates to a cylinder lubrication of large slow running two-stroke diesel engines, for example ship engines, wherein piston pumps are used for injection of oil into engine cylinders. The pistons in the piston pumps are advanced through a plurality of partial strokes, typically over multiple engine revolutions, before being retracted.

### BACKGROUND OF THE INVENTION

Danish patent DK177574B1 discloses an apparatus and method for lubricating of large slow running two-stroke diesel engines, wherein the engine comprises a plurality of lubrication piston pumps that are moved simultaneously by a common lubrication drive. In more detail, DK177574B1 discloses a method for operating a cylinder lubrication device for a large slow running two-stroke diesel multi-cylinder engine having in each cylinder a reciprocating piston with piston rings that slide on the inner surface of the cylinder liners. The cylinder lubrication device provides the inner surface of the cylinder liners with a precisely dosed quantity of cylinder lubrication oil per reciprocation or per number of reciprocations of the cylinder via a plurality of injection points that are distributed at equal level around the circumference of a cylinder. The cylinder lubrication device comprises a plurality of piston pumps, each piston pump having a dosing plunger sliding in the dosing cylinder between a start position (S) and an end position (E). The movement of the dosing plungers between the start position (S) and the end position (E) form a full stroke. A common drive includes a linear actuator for driving all of the dosing plungers simultaneously in both directions between the start position (S) and the end position (E). The feature that is defined as novel in DK177574B1 is that the dosing plungers are moved simultaneously by means of the linear actuator in a plurality of progressive part strokes from the start position (S) to the end position (P) for creating a plurality of cylinder oil injection events. Furthermore, the dosing plungers are retracted from their end position (E) back to the start position (S) by means of the linear actuator in one full stroke, only when the plungers have reached their end position (E).

As explained in DK177574B1, the advantage of the stepwise actuation until the full stroke has been achieved is that wear on the dosing plungers, dosing cylinders, actuators and drive mechanism is evenly distributed over the full length of the stroke, which increases the lifetime of the cylinder lubricating device.

Due to the apparent recognised advantage as explained in DK177574B1, it reads specifically on page 31 of DK177574B1 that the system always uses the full stroke, and it is emphasized on page 33 top and page 34 bottom that the dosing plungers are not repositioned to their extreme rearward position until the maximum stroke length of the plungers has been reached. This is very important for the system in DK177574B1 in order to measure the injected cylinder oil amount precisely, because the latter is done by counting the number of full strokes over time. It is explained that the electronic control unit calculates the number of full strokes performed in order to sum up the delivered oil amount. The full stroke is detected by a separate full stroke sensor.

In DK177574B1, it is further explained that the full stroke implies a problem, namely the fact that the volume of the last part stroke before retraction of the piston is not sufficient for a desired lubrication portion. To solve this problem, the next part stroke after retraction is correspondingly larger and compensate for the lack of lubrication of the last stroke before retraction. In DK177574B1, no other compensation method is disclosed that the added lubrication in the subsequent part stroke.

However, although theoretically appealing, the method in DK177574B1has a severe disadvantage as explained in the following. In cases where the volume of the available lubrication in the last part stroke is substantially smaller than the desired lubrication volume, possibly even close to zero, such lubrication step corresponds largely to a missing lubrication step. Taking into regard the lubrication may be done for every four, five or six revolutions of the engine, as explained in In DK177574B1, this lack of proper lubrication may result in the engine running up to 12 revolutions between two proper lubrication injections. Taking into regard that the piston is reciprocating back and forth during a revolution, there is a lack of proper lubrication over 24 reciprocal sliding movements of the piston. This, in turn, can result in substantial additional wear on the piston and the liner in the cylinder. Thus, it appears that proper maintenance of the large engine is compromised in turn for the reduction of wear in the lubrication system. However, as the engine is much harder to change and renovate than the lubrication system, the system and method in DK177574B1 does not appear optimised.

In Danish patent application DK2013 00272, issued as patent DK177845B1, a similar system is disclosed. In a particular embodiment, the movement of the last part of the movement of the dosing plunger is measured, and the shortfall of lubrication compensated for in the subsequent lubrication.

However, this alternative method with the compensation step has the same disadvantages as described above, where a very small injected amount corresponds largely to a missing lubrication step. The compensation in a subsequent lubricant injection does not repair or circumvent any increased wear due to the previous lubrication shortfall.

### DESCRIPTION / SUMMARY OF THE INVENTION

It is therefore the object of the invention to provide a system that does not have the disadvantage as the prior art. Especially, it is an objective of the invention to provide a system and method that reduces wear in the lubrication system without compromising the lubrication of the engine. This objective is achieved with an apparatus and method for operating a cylinder lubrication apparatus for a large slow running two-stroke diesel multi-cylinder engine as described in the following.

The engine has in each cylinder a reciprocating piston that slides on the inner surface of the cylinder liner, whereby the cylinder lubrication apparatus provides said inner surface of the cylinder liner with a dosed quantity of cylinder lubrication oil during a lubrication cycle. The lubrication cycle is performed per reciprocation or per number of multiple reciprocations of the engine piston, where the piston moves back and forth during each engine revolution. For example, the lubrication cycle is performed for each engine revolution or each number of multiple revolutions. Lubrication oil is in-j ected into each cylinder via a plurality of injection nozzles that are distributed around the circumference of the cylinder.

The cylinder lubrication apparatus comprises a plurality of piston pumps, each piston pump having a dosing plunger slidably moving in a dosing cylinder. Each dosing cylinder comprises an injection chamber in fluid communication with an injection outlet, where each injection outlet is connected to an injection nozzle of one of the cylinders. The piston pump is arranged for reducing the volume of the injection chamber by advancing the dosing plunger and thereby pumping lubrication oil from the injection chamber through the injection outlet to the injection nozzle. When the dosing plunger is retracted, the injection chamber is correspondingly filled again with lubrication oil.

A linear actuator is connected to the dosing plunger and configured for driving said dosing plunger progressively in successive partial strokes between two constructionally determined extreme positions, the first of the extreme positions corresponding to a fully retracted dosing plunger and the second of the two extreme positions corresponding to a fully advanced dosing plunger. Thus, the distance between the two extreme positions corresponds to a full stroke of the dosing plunger. The successive partial strokes have to be understood such that a first partial stroke is performed from a first stroke position to a second stroke position and a successive second partial stroke is performed from the second stroke position to a third stroke position, wherein the third stroke position is closer to the second of the two extreme positions that the second stroke position, and the second stroke position is closer to the second extreme position than the first stroke position. In other words, each second partial stroke brings the dosing plunger closer to the second extreme position than the first partial stroke. Typically, there are more than two of such successive partial strokes, and the dosing plungers are advanced by these plural successive partial strokes without retraction of the dosing plunger between the partial strokes. This progressive step by step motion is performed without intermediate retraction of the dosing plungers, but retraction of the dosing plungers is only done after plural of these successive partial strokes.

A sensor is provided for determining the relative position of the dosing plunger, the relative position being the actual position of the dosing plunger relatively to the extreme positions. The relative position is indicated by sensor data. In some embodiments, the relative position is sensed directly, for example by a position sensor provided in connection with the dosing cylinder, where the position sensor measures the actual position of the dosing piston inside the dosing cylinder relatively to its extreme positions.

Alternatively, the relative position is sensed indirectly. For example, the actuator comprises a hydraulic piston that is connected to the dosing plunger, and the indirect sensing is performed by a position sensor that is sensing the actual relative position of the hydraulic piston of the actuator. If the actuator is not a hydraulic actuator but a mechanical actuator of the type with a spindle, the rotational or linear position of the spindle can be sensed by the sensor. A further indirect alternative is to measure the quantity of oil delivered to the actuator and relate this to the advance length of the dosing piston; such type of indirect measurement may require some prior calibration.

In some embodiments, the pressurized hydraulic oil for advancing the piston in the hydraulic actuator is supplied through an on/off type valve. The length of the partial stroke can be regulated by opening the valve for hydraulic oil supply to the actuator during a predetermined period of time, where the period of time is related to the length of the partial stroke. In order to achieve a more precise control, a position sensor is used as a feedback for precisely adjusting the time period and closing the valve, once the correct partial stroke length has been achieved.

Alternatively, the data provided from the position sensor are the only decisive measure for the advance of the dosing plunger, independent of the opening time of the valve.

The latter is relevant in cases where special speed profiles are used for the advance of the dosing plungers, where such speed profiles can be obtained by using a proportional valve with a varying flow of pressurized hydraulic oil into the actuator. Accordingly, in some embodiments, the pressurized hydraulic oil for advancing the piston in the hydraulic actuator is supplied through a proportional valve. The speed of the advancing of the valve is optionally dependent on the actual operation parameters of the engine.

A computer, for example a central computer, is configured for receiving the sensor data from the sensor, the sensor data expressing the relative position of the dosing plunger. The computer is further configured for receiving engine data from various monitoring units, the engine data being indicative for the actual operations conditions of the engine.

The processing and control data, including position data, can as explained be processed centrally by the central computer, but might as well be done by a number of local computer units, for example one computer unit per cylinder. Typically it is a question of what degree of integration is desired and how the other surrounding systems are laid out. Thus, in the following, the general term computer is used for such central computer or local computer.

The linear actuator is instructed by the computer to move the dosing plunger from the first extreme position towards the second extreme position in a plurality of successive partial strokes before retracting the dosing plunger. Thereby, lubrication oil is portionwise injected into the cylinder over a plurality of engine revolutions before retraction of the dosing plunger. It should be mentioned that the system is also, in principle, configured for emptying the entire injection chamber in a single stroke. However, due to suitable dimensioning of the dosing cylinder and the injection chamber, this is not the normal case, as the injection chamber is dimensioned in cross section and length such that is contains a volume of lubrication oil corresponding to a plurality of oil injections during multiple lubrication cycles at normal engine operation.

After receipt of the sensor data by the computer, it determines on the basis of the received sensor data a first parameter indicative for a first volume, which is a volume of lubrication oil that is left in the injection chamber for potential pumping by the corresponding dosing plunger. Thus, the first volume is the volume that is left for possible injection if the dosing plunger is advanced from the actual position in the dosing cylinder to the second extreme position, the latter being the very end position that is possible for the dosing piston during advancement.

After the computer receives the actual engine data, it determines on the basis of the received engine data a second parameter indicative for and uniquely expressing the second volume which is the dosed quantity of lubrication oil determined for injection into the cylinder through the nozzle in the actual lubrication step. Thus, automatically, the computer determines on the basis of the engine data, how much lubrication oil would be optimum for supplying to the engine cylinder through the various injection nozzles.

For example, the first parameter is identical to a quantity number for the first volume. Alternatively, the first parameter is a figure for the length at which the dosing plunger can still be moved. Correspondingly, the second parameter is identical to a quantity number for the second volume. Alternatively, the second parameter is a figure of the length at which the dosing plunger has to be moved for proper injection, the length representing an equivalent to the second volume. The important fact is that the first and second parameters uniquely represent the respective volume of lubrication oil for comparison.

Next, the computer automatically compares the first parameter with the second parameter, for example the first volume with the second volume, and if the comparison indicates that the first volume is not less than the second volume, the dosing plunger is advanced by the linear actuator over a distance inside the injection cylinder corresponding to second volume, which is the specifically determined dosed quantity that is to be injected, for example an optimum quantity as calculated on the basis of actual engine operation parameters. However, if the comparison indicates that the first volume is less than the second volume, the computer takes a decision on whether the dosing plunger is to be retracted prior to the planned lubrication step or whether the still remaining volume in the injection chamber is acceptable for the planned lubrication step. In order to determine whether the still remaining volume is acceptable, a volume threshold is set, which is more than 50% but less than 100% of the second volume. In such case, if the still remaining volume is less than a predetermined threshold volume, the linear actuator is retracting the dosing plunger prior to the injection of the planned lubrication step with the dosed quantity into the cylinder. During the retraction, the volume of lubrication oil in the injection chamber is increased such that there is sufficient oil for the next lubrication injection.

For example, the threshold volume for accepting a further partial stroke is a fraction of 80% of the second volume, which typically is the optimum lubrication oil volume for injection. Although, the amount left in the injection chamber is less than calculated for optimum lubrication, an injection of at least 80%, for example at least 90%, would still be acceptable such that the dosing plunger need not be retracted before injection. However, if the volume in the injection chamber is less than 80%, the dosing plunger is retracted prior to injection of the dosed quantity, which is then injected in full.

As it appears from the system as described, the disadvantage as initially described in connection with the prior art, especially DK177574B1, has been overcome, because the plunger is retracted prior to reaching the end if it has been calculated that the remaining volume in the injection chamber is not sufficient for a proper lubrication of the engine. For example, if the remaining volume is less than a predetermined threshold value, such as 50%, 60%, 70%, 80% or 90% of the second volume, the plunger is retracted before the next lubrication injection.

Whether the threshold is in the low end of the above mentioned threshold values or it is rather near or at 100% may depend on whether the lubrication injection is done for each engine revolution or for a plurality of engine revolutions. For example, if a lubrication injection is done for each engine revolution, a lower limit of 50% in a single injection may be acceptable, whereas if the lubrication is done for each sixth revolution of the engine, the threshold value may closer to 100%, as a proper lubrication would be at risk.

Although, this system would imply that the wear on the last part of the plunger cylinder and the actuator system are not exposed to the same wear as the first part, due to the relatively early retraction as compared to the system in DK177574B1, the invention has the general advantage over DK177574B1 that proper lubrication of the engine is not compromised.

In contrast to DK177574B1, the total amount of used oil is not measured by counting the number of full strokes; the total amount of used oil can be determined in different ways, for example by adding the determined dosages from each partial stroke or simply by measuring the change of remaining oil in the tank that provides the lubrication oil.

For example, a single lubrication cycle comprises multiple injections. In this case, in some embodiments, the second volume is then calculated as the dosed quantity of lubrication oil that in total is desired for these multiple injection into the cylinder per lubrication cycle.

For example, if the injection per lubrication cycle is once per each second revolution of the engine, but the injection is made once when the piston is on the way up and once when it is down in the specific lubrication cycle, two advances of the dosing plunger are required per lubrication cycle. For example, in this case, the desired volume (second volume) for both partial stokes within the same engine revolution is determined and compared with the volume of lubrication in the injection chamber which is still possible to eject from the injection chamber (first volume). This implies that the dosing piston is not retracted while the piston is on the way to return within the same engine revolution but is retracted in the time where one revolution of the engine is not requiring lubrication oil injection.

It is pointed out that the second extreme position of the dosing plunger is typically not at the end wall of the injection chamber, but there is typically a rest volume in the injection chamber even when the dosing plunger is at the very end of its maximum possible stroke. For calculation of the second volume, it would thus not be correct to calculate the actual remaining oil volume of the injection chamber, but the second volume to be calculated is that volume part of the injection chamber that the dosing plunger potentially can still eject if advanced to the second extreme position.

In some embodiments, the cylinder lubrication apparatus comprises a plunger connector connected to a plurality of dosing plungers and is arranged to move said dosing plunger simultaneously. In this case, the linear actuator is connected to said plunger connector for driving said plurality of dosing plungers simultaneously within the range of positions. For example, plungers are driven in groups, the number of which corresponds to the numbers of injection nozzles of a single cylinder. Alternatively, the group of plungers that supply oil to all the nozzles for a single cylinder are divided into subgroups, where the plunger connector is constructed for activation for each subgroup individually by an actuator.

The computerised lubrication dosing allows a great variety of lubrication programs. For example, all cylinders may be lubricated identically. However, it is also possible to adjust the lubrication individually per cylinder, for example dependent on the temperature of the specific cylinder and the measured wear of the specific cylinder, seeing that not all cylinders are exposed to exactly the same degree of wear with time.

### SHORT DESCRIPTION OF THE DRAWINGS

The invention will be explained in more detail with reference to the drawing, where
FIG. 1 is a principle sketch of the system in connection with a large engine;
FIG. 2 illustrates an embodiment of a dosing device;
FIG. 3 is a flow diagram for injection logic;
FIG. 4 illustrates a second embodiment of the invention.

### DETAILED DESCRIPTION / PREFERRED EMBODIMENT

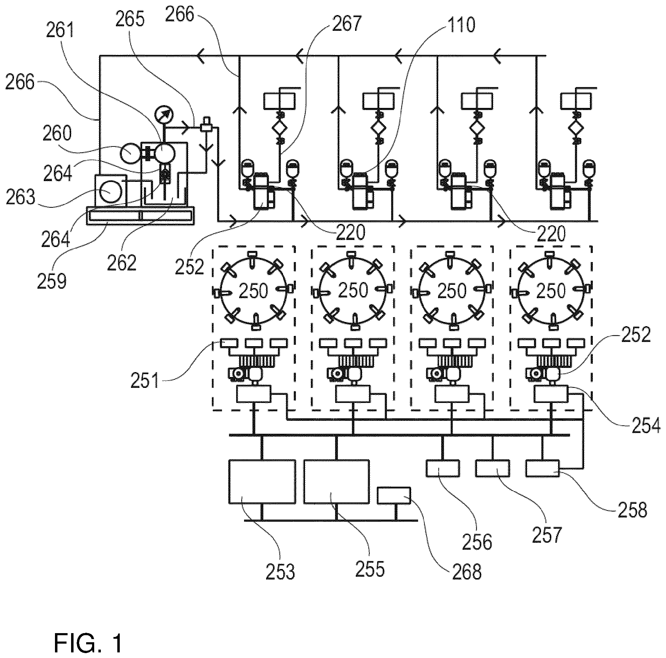

Fig. 1 shows schematically four cylinders 250 of a slow running two-stroke diesel engine, although, typically, there are more than four cylinders. Each cylinder 250 is provided with eight injection nozzles 251 for injecting lubrication oil. The number of eight can be modified to more or less injection nozzles. Typically, however, there are at least six injection nozzles 251 on each cylinder 250. Lubricating apparatuses 252 are provided for supplying lubrication oil to the nozzles 251. The lubrication oil supply to the nozzles 251 is regulated with respect to the timing and the amount of oil, and optionally also a speed profile for the oil injection. The lubricating apparatuses 252 are functionally connected to a central computer 253 with local control units 254, typically one for each single lubricating apparatus 252. The central computer 253 is functionally coupled to a first monitoring unit 256 that is monitoring a hydraulic pump 261; a second monitoring unit 257 that is monitoring the engine load and other engine parameters, for example engine speed, actual fuel consumption, and cylinder liner temperature; and a third monitoring unit 258 that is monitoring the position of the crankshaft and the related positions of the engine pistons. Further monitoring units 255 may be providing further information about the engine to the central computer 253. In return, the central computer 253 is configured for sending operational instructions in the form of electronic signals to an interface 268 for control of the operation of the engine.

The central computer 253 is collecting information from these monitoring units 255, 256, 257, 258 and sends digital commands to the control units 254 of the lubricating apparatuses 252 in order to correctly regulate the injection of lubrication oil through the nozzles 251. In the upper part of Fig. 1, there is shown a hydraulic station 259 comprising a motor 260 driving a hydraulic pump 261 in a tank 262 that contains hydraulic oil. The hydraulic station 259, furthermore, includes a cooler 263 and a filter 264. Hydraulic oil for the system is pumped via supply conduit 265 into the lubricating apparatus 252 valves 220. The hydraulic station 259 is furthermore connected with a return conduit 266 which is also connected to the lubricating apparatus 252 via a valve 220. Lubricating oil is forwarded to lubricating apparatus 252 via a conduit 267 from a lubricating oil supply tank (not shown). From the lubricating apparatus 252, the lubricating oil is forwarded via conduits 110 to the injection nozzles 251.

In alternative embodiments, the control units 254 may be arranged and programmed as local computers that receive engine data from the various monitoring units and sensor data and determine the best dose to inject into the engine. Thus, the control units 254 would substitute or possibly even just supplement the central computer 253 with respect to its role of determining proper lubrication dosage in dependence of the actual engine operation.

The lubricating apparatuses 252 comprise hydraulic actuators that are driven by the hydraulic oil under control by the control units 254 and which regulate the amount of pressurised lubrication oil that is pumped through the injection nozzles 251. This is achieved by the hydraulic actuators being connected to dosing plungers for actuating these dosing plungers to regulate the amount of oil that is provided to the injection nozzles 251 for injection. As explained below in greater detail, the actuators advances the dosing plungers step wise in successive partial strokes over predetermined but variable lengths between two extreme positions, the first of the two extreme positions being a position of the dosing plungers when fully retracted, and the second of the two extreme positions being a position with the dosing plungers are fully advanced, that is an end position for possible displacement of the dosing plungers. In each step the dosing plungers compress lubrication oil to a degree that it is injected into the cylinder 205 through the injection nozzles 251. A number of lubrication oil portions are injected into the cylinder 250 during intermitted advance of dosing plungers a plurality of times over a fraction of the maximum stroke in the direction towards the second extreme position before the dosing plungers are retracted again. In other words, the dosing plungers are not retracted before a plurality of partial strokes has been made. This is in principle similar to the injection principle as disclosed in the above mentioned Danish patent DK177574B1 by MAN Diesel.

However, in comparison with DK177574B1, where the dosing plungers are always advanced till the very end of the maximum stroke, at the second extreme position, the invention differs in that the central computer 253 (or a set of local computers as alternative) does not necessarily advance the dosing plungers to the second extreme position, which is the maximum possible stroke. Instead, the central computer 253 determines a volume (second volume) of lubrication for the next injection and compares it with the volume that the dosing plungers are able to potentially deliver with the still yet remaining maximum possible stroke. On the basis of this comparison, the central computer 253 in cooperation with the control units 254 decides whether the dosing plungers are to be retracted before the next partial stroke, for example because they reach the end position without delivering sufficient lubrication oil, or whether the dosing plungers are further advanced before retraction. For example, the central computer 253 receives information from the control unit 254 in cooperation with the lubrication apparatus 252 about the actual position of the dosing plunger in the lubricating apparatus 252; calculates from this information a parameter indicative for and uniquely expressing the volume of the still possible partial stroke of the dosing plunger and compares this with the desired volume of lubrication oil for injection. This desired volume (second volume) being dependent on the actual engine parameters received by the central computer 253 from corresponding monitoring units, including the first, second and third monitoring units 256, 257, 258; and the plunger is retracted before the next injection cycle only if the still possible partial stroke is less than a predetermined threshold volume, which is a fraction of the desired volume (second volume), where the fraction is at least 50%, for example 60%, 70%, 80%, or 90% of the desired volume. Whether the threshold volume is in the low percentage end of the above mentioned threshold values or it is rather near 100% may potentially depend on whether the lubrication injection is done for each engine revolution or for a plurality of engine revolutions.

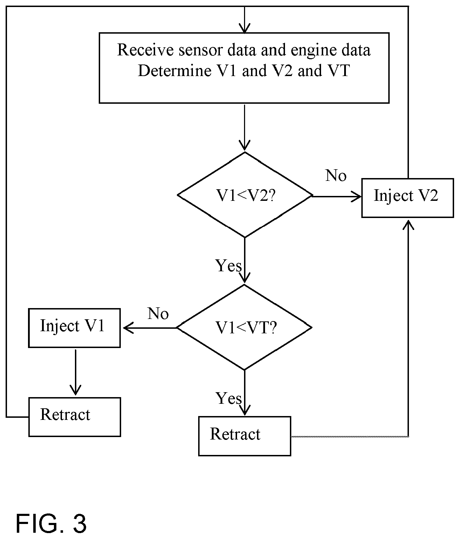

The injection logic according to this embodiment is illustrated in FIG. 3 with the abbreviations of
V1 - first volume, which is the volume that is left for possible injection if the dosing plunger is advanced from the actual position in the dosing cylinder to the second extreme position, the latter being the very end position that is possible for the dosing piston during advancement;
V2 - second volume, which is the dosed quantity of lubrication oil that is determined by the computer for injection into the cylinder through the nozzle;
VT - threshold volume for accepting a further partial stroke that injects a predetermined fraction of the second volume.

The computer-determined advance of the dosing plungers implies a high degree of freedom for when and how often to advance the dosing plungers in partial strokes. For example, a lubrication cycle may comprise a single partial stroke, and the lubrication cycle is performed for each engine revolution or for every predetermined plurality of revolutions, such as for each two, three, four, five or six revolutions; this means that for some engine revolutions of the engine, there is no lubrication injection. Alternatively, a plurality of partial strokes can be performed for each lubrication cycle. In the case of each lubrication apparatus being connected to its own control unit 254, the injection of lubrication oil into different cylinders 250 of the engine need not to be done during the same engine revolution.

If desired, it is possible to activate two or more partial strokes within one engine stroke and the system may at the same time also change other settings that results in the individual partial strokes. For example different combinations of system pressure (controllable via a proportional pressure valve) and the activation time for the solenoid valve, controlling the movement the actuator, will result in different characteristics of the dosed oil. When planning to dose oil directly onto a piston, a fast delivery is beneficial, but in case that a wider distribution is wanted, a longer dosing time is needed.

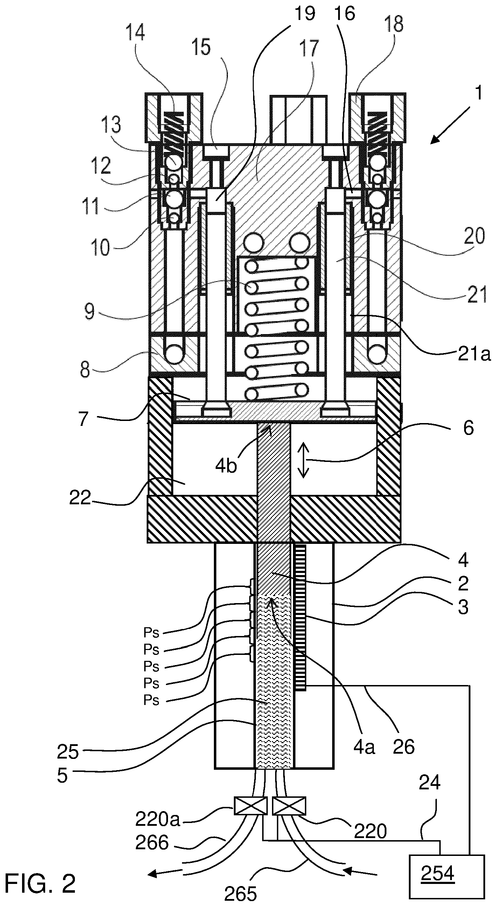

Fig. 2 shows a cross-section through a dosing device 1 which is part of the lubrication device 252 for supply of lubrication oil to a plurality of nozzles 251 for cylinder lubrication of a large slow running diesel engine, for example for ships, as outlined above. The dosing device 1 comprises injection passages 18 for tube connection 110 to injection nozzles 251. The dosing device 1 has the function of dosing the desired amount of lubrication to the nozzles 251 at the correct pressure and at the correct timing as explained above with reference to the central computer 253 and the control unit 254.

The dosing device 1 comprises an actuator 2. Inside the actuator 2, a first piston 4 is arranged movable along a piston lining 5. The first piston 4 is driven by hydraulic oil inside an actuator reservoir 25 and acting on the first end 4a of the first piston 4, the pressurised filling of which with hydraulic oil through a valve system 23 causes the first piston 4 to be pressed in a forward direction towards the injection housing 8 in which the dosing plungers 21 are provided. The control unit 254 is electrically connected with electrical connection 24 with the valve system 220 for controlling the portion-wise pumping of pressurised hydraulic oil from the supply conduit 265 and through the valve system 220 into the actuator reservoir 25 and for thereby pressing the first piston 4 step wise in partial strokes Ps in the direction towards the injection housing 8. During retraction of the first piston 4, the hydraulic oil is removed from the actuator reservoir and into the return conduit 266 through the further valve system 220a, which is also electrically connected to the control unit 254.

It is pointed out that the partial strokes Ps in FIG. 2 are for sake of simplicity indicated as being equally long. However, this is not always the case, as the partial strokes Ps may vary due to changing engine parameters, such as load and speed. The amount to be dosed is calculated from various parameters, for example including one or more of the following: actual engine load, desired feed rate, choice of regulating algorithm (load regulated or so called rpm or mep regulation), ratio between engine and lubricator strokes (number of desired injections per engine strokes), dosing piston diameter, oil analyses, sulphur percentage, and fuel type, for example, residual TBN, Fecontents. These parameters are either read by the central computer 253 in automatically and directly or indirectly via a central monitoring unit or a plurality of monitoring units unit. Optionally, the monitoring units also have the function as control units elated to various functions.

The second end 4b of the first piston 4 is attached to a plunger connector 7 which acts as a distributor plate and which is arranged inside a connector chamber 22 movable in the same direction as the first piston 4, indicated by double arrow 6. The plunger connector 7 is connected to a plurality of dosing plungers 21 in a pump block 17, each of which is sliding inside a plunger lining 20 in synchronism with the fist piston 4. The sliding of a dosing plungers 21 cause change of the volume in the corresponding injection chambers 19. By the plunger connector 7, the plungers 21 are connected to the first piston 4 in such a way that the movement of the first piston 4 back as well as forward is transferred to the plungers 21. When the first piston 4 is retracted, also the plungers 21 are retracted while lubrication oil is supplied to injection chamber 19 via a double suction (none-return) valve 10 and 11. When the plunger 21 is pushed forward by plunger connector 7 due to forward movement of the first piston 4, pressure builds up in injection chamber 19 and, once the pressure exceeds the force of the spring 14 in the double pressure valves 12 and 13 and the pressure in the conduit 110 to the injection nozzle via injection passage 18, lubrication oil is pressed through injection conduit 16, through outlet valve 13 and into injection passage 18 and further from injection passage 18 through conduit 110, as shown in FIG. 1, to the injection nozzle 254 at the cylinder 250 of the engine.

A spring 9 or, alternatively a hydraulic return actuator (not shown), presses against the plunger connector 7 and causes or assists retraction of the plunger connector 7 together with first piston 4 and the dosing plungers 21.

The functioning of the system is explained by the following illustrative example, which however is not limiting the invention with respect to the volume examples given. In this example, the central computer 253 calculates on the basis of the engine parameters that the injection nozzles 251 for each lubrication cycle should be provided with a volume of lubrication oil that corresponds to a fraction, for example 15%, of the maximum volume of the injection chamber 19. When the dosing plungers 21 are fully retracted and subsequently pushed forward in one partial stroke Ps in each lubrication cycle, this fraction of 15% can be injected 6 times before retraction, namely one time (or two times) in each lubrication cycle; for example, one lubrication cycle is performed each time the engine has made 4 revolutions. After these six lubrication cycles with each 15% injection, the dosing piston has been advance to 90% of the maximum stroke and only 10% of the maximum oil-filled volume of the injection chamber 19 is left for further injection into the injection passage 18 for the next lubrication cycle. This may be determined as not being sufficient for a proper lubrication in the subsequent lubrication cycle. For this reason, the central computer 253 in cooperation with the control unit 254 causes the actuator 2 to retract the first piston 4 together with the dosing plungers 21 before the next lubrication cycle.

As the first piston 4 and the dosing plungers 21, typically, are retracted before reaching the end position for a maximum stroke, the wear on the lining 5 of the actuator and the wear on the lining of the plunger lining 20 is not completely even, in contrast to the system as disclosed in DK177574. However, this is acceptable as a minor disadvantage as compared to the fact that proper lubrication of the engine is not compromised.

In certain embodiments, a minor deviation from the optimum lubrication volume is accepted, and the dosing plungers are driven to the very end of the possible forward displacement. For example, this may be the case if the remaining volume in the injection chamber 19 is 90% or 80% of the desired lubrication volume. In this case, the 80% or 90% are regarded as sufficient for the lubrication. However, in contrast to the system as disclosed in DK177574, such lubrication volume of slightly less than the desired volume would not be followed by a corresponding compensation in the following lubrication step. This is so, because an overshooting of lubrication in a subsequent step does not retroactively prevent the wear in the cylinder lining from insufficient lubrication in a previous step. For this reason also, the slight reduction of the actual lubrication volume as compared to the desired lubrication volume is only accepted if the reduction is within a margin such that proper lubrication in general is not compromised by this single lubrication cycle with reduced lubrication volume.

Typically, between series of partial strokes, the first piston 4 and the dosing plungers 21 are fully retracted, although in principle, a partial retraction is also possible.

As an alternative to a separate hydraulic oil circuit for driving the hydraulic actuator 2, lubrication oil can also be used, for example connected to the lubrication oil tank which is used for lubrication oil injection. In this case, the hydraulic oil system as described in FIG. 1 is substituted by a similarly functioning system for lubrication oil.

As an alternative of the sensor 3 being provided in the actuator 2 for measuring the relative position of the first piston 4, a sensor could be provided that measures the relative position of the plunger connector 7 or of the dosing plunger 21.

The system according to the invention allow a single partial stroke to be performed for each lubrication cycle, where each cycle is performed per reciprocations of said piston or per number of multiple reciprocations of said piston. Two reciprocations, one forward and one back, is made in one revolution of the engine. However, it is also possible to use multiple injections per lubrication cycle, for example two injections each time the cylinder passes the injection nozzles. In the latter case, advantageously, the central computer could be configured to calculate whether the injection chamber 19 contains still enough lubrication oil for the entire lubrication cycle, and if this is not the case, the dosing plunger is retracted.

The valve system comprises optionally an on/off valve, and the advance of the piston 4 in the actuator 2 is controlled by control of the time period in which an inlet valve 220 is open. Alternatively, the inlet valve 220 is a proportional valve where it is possible regulate the flow through the inlet valve 220 by the control unit 254 upon instructions from the central computer 253.

During filling of the actuator and corresponding advance of the first piston 4, the inlet valve 220 is open and the outlet vale 220a is closed. During retraction, the inlet valve 220 is closed and the outlet valve 220a is open.

It is for completeness pointed out that the hydraulic actuator 2 could be replaced by a spindle actuator or other type of mechanical actuator.

The plunger connector 7 connects the first piston 4 with a number of dosing plungers 21. These dosing plungers 21 can be provided as a first group of dosing plungers which are connected to a first group of injection nozzles 251. Likewise, further plunger connectors and further hydraulic actuators can be provided for driving further groups of dosing plungers in order to have the possibility of differentiating the dosages in various groups of injection nozzles. This aspect is in principle discussed in US8602167 and in DK1796934, and the principle can be transferred to the above described system.

As an alternative to the spring 9, a second actuator with a second piston could be provided, for example as described in DK177574. The advantage is a faster retraction of the plunger connector 7. However, in the case, where the lubrication oil injection is performed for every multiplicity of engine revolution, the retraction is typically fast enough.

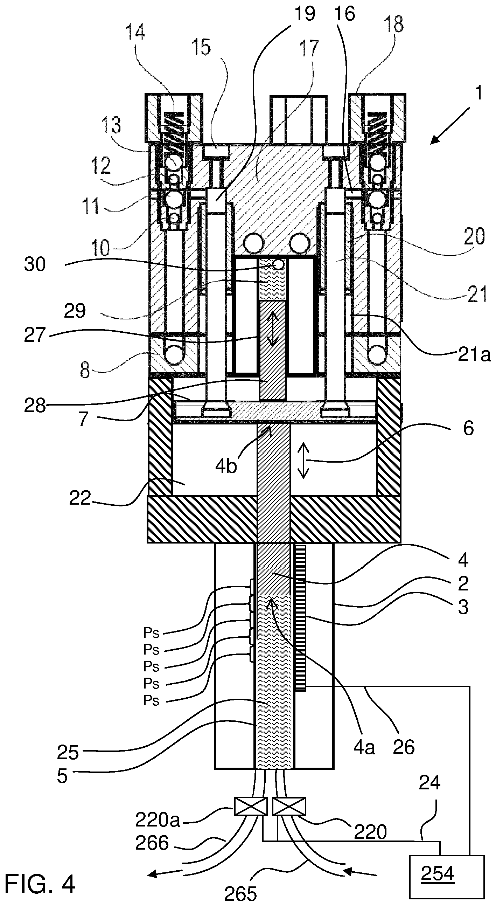

FIG. 4 is a further embodiment in which the dosing device 1 has been modified in that the return spring 9 has been substituted by a second actuator 27 which is used for returning the plunger connector 7 with the dosing plungers 21 back to the first extreme position. All numerals that are identical to the ones in FIG. 2 will not be explained again, but there is referred to the explanation above. The second actuator 27 comprises a piston 28 attached to the plunger connector 7 and which is sliding in dependence on the amount of hydraulic oil in a reservoir 29 behind the piston 28, the hydraulic oil being supplied through an oil supply 30. When the first actuator 2 is activated, the plunger connector 7 moves the dosing plungers 21 in one direction that decreases the volume of the injection chamber 19 and causes injection of oil into the engine. In his mode, the second piston 27 moves together with the second piston 28, and the reservoir 29 behind the second piston 28 is drained. Once the dosing plungers 21 are to be retracted, the second actuator 27 is activated and oil pumped into the reservoir 29 of the second actuator 27, and the reservoir 25 of the first actuator 2 is correspondingly drained. In order to drain and fill the two actuators 2 and 27, correspondingly functionally coupled valves can be used, optionally, a single valve is used that toggles between filling one reservoir 25 and draining the other 29 and vice versa.

### Numbering:

1 Dosing device as part of the lubrication device 252
2 First actuator
3 Sensor for sensing position of first piston 4
4 First piston
5 Piston lining in first actuator 2
6 Arrow indicating movement of first piston 4
7 Plunger connector connecting first piston 4 with dosing plungers 21
8 Injection housing
9 Return spring for plunger connector 7
10 -13 double suction and pressure valves
14 Spring in valve
15 Vent valve
16 Injection conduit
17 Pump block
18 Injection passage for connection to injection nozzle 251 via conduit 110
19 Injection chamber
20 Plunger lining
21 Dosing plunger
21a Dosing cylinder
22 Connector chamber inside which plunger connector 7 moves
24 Electrical connection of valve system 220 and 220a to control unit 254
25 Actuator reservoir for first actuator 2
26 Electrical connection of position sensor 3 to control unit 252
27 Second actuator
28 Second piston in second actuator 27
29 Reservoir of second actuator 27
30 Oil supply for second actuator 27
110 Conduit for lubricating oil from lubrication apparatus 252 to injection nozzle 251
220 Valve system for supply of hydraulic oil to lubrication apparatus 252 and dosing device 1
220a Valve system for drain of hydraulic oil from lubrication dosing device 1
250 Cylinders of a slow running two-stroke diesel engine
251 Injection nozzle
252 Lubricating apparatuses
253 Central computer
254 Control units
256 First monitoring unit monitoring hydraulic pump 261
257 Second monitoring unit monitoring the engine load
258 Third monitoring unit 258 is monitoring the position of the crankshaft
259 Hydraulic station
260 Motor driving hydraulic pump 261
261 Hydraulic pump
262 Tank for hydraulic oil
263 Cooler
264 Filter
265 Supply conduit for oil into lubricating apparatus 252 via a valve 220
266 Return conduit
267 Conduit for oil transport to lubricating apparatus from tank (not shown)
268 Interface for engine control

## Claims

1. A method for operating a cylinder lubrication apparatus (252) for a large slow running two-stroke diesel multi-cylinder engine having in each cylinder (250) a reciprocating piston that slides on the inner surface of the cylinder liner, whereby the cylinder lubrication apparatus (252) provides said inner surface of the cylinder liner with a dosed quantity of cylinder lubrication oil during a lubrication cycle, the lubrication cycle being performed per reciprocation or per number of multiple reciprocations of said piston via a plurality of injection nozzles (251) that are distributed around the circumference of a cylinder (250), said cylinder lubrication apparatus (252) comprises:
- a plurality of piston pumps (10-21, 21a), each piston pump having a dosing plunger (21) slidably movable in a dosing cylinder (21a), each dosing cylinder (21a) comprising an injection chamber (19) in fluid communication with an injection outlet (18), each injection outlet (18) being connected by a conduit (110) to an injection nozzle (251) of one of the cylinders (250); the piston pump being arranged for reducing the volume of the injection chamber (19) by advancing the dosing plunger (21) and thereby pumping lubrication oil from the injection chamber (19) through the injection outlet (18) to the injection nozzle (251);
- a linear actuator (2) connected to said dosing plunger (21) and configured for driving said dosing plunger (21) in successive partial strokes between two constructionally determined extreme positions, the first of the extreme positions corresponding to a fully retracted dosing plunger (21) and the second of the two extreme positions corresponding to a fully advanced dosing plunger (21);
- a sensor (3) for determining the relative position of the dosing plunger (21), the relative position being the actual position of the dosing plunger (21) relatively to the extreme positions;
- a local or central computer (253) configured for receiving sensor data from the sensor (3), the sensor data being indicative of and uniquely expressing the relative position of the dosing plunger (21); the local or central computer (253) further being configured for receiving engine data from monitoring units (255, 256, 257, 258), the engine data being indicative for the actual operation conditions of the engine;
- said method comprises instructing said linear actuator (2) by said local or central computer (253) to move said dosing plunger (21) from the first extreme position towards the second extreme position in a plurality of successive partial strokes and retracting the dosing plunger (21) only after having performed the plurality of successive partial strokes for thereby injecting a number of lubrication oil portions into the cylinder (250) over a plurality of engine revolutions before retraction of the dosing plunger (21);
**characterized in that** the method further comprises:
the local or central computer (253) receiving the sensor data and the engine data;
on the basis of the received sensor data determining a first parameter indicative for and uniquely expressing a first volume, which is a volume of lubrication oil that is left in the injection chamber (19) for potential pumping by the corresponding dosing plunger (21); on the basis of the received engine data determining a second parameter indicative for and uniquely expressing a second volume which is the dosed quantity of lubrication oil determined by the local or central computer for injection into the cylinder (250) through the nozzle (251); the local or central computer automatically comparing the first parameter with the second parameter, and if the comparison indicates that the first volume is less than a threshold volume, instructions from the local or central computer causing the linear actuator (2) to retract the dosing plunger (21) and thereby increasing the volume of lubrication oil in the injection chamber (19) prior to the injection of the second volume into the cylinder (250);
wherein the method comprises, if the comparison indicates that the first volume is less than the second volume but not less than the threshold volume, wherein the threshold volume is more than 50% but less than 100% of the second volume, advancing the dosing plunger (21) by the linear actuator (2) until the second extreme position and subsequently retracting the dosing plunger (21).

2. A method according to claim 1, wherein the threshold volume is at least 80% of the second volume.

3. A method according to claim any preceding claim, wherein a lubrication cycle comprises multiple injections; wherein the second volume is the dosed quantity of lubrication oil that in total is desired for multiple injection into the cylinder (250) per lubrication cycle.

4. A method according to claim 3, wherein a lubrication cycle is related to a single engine revolution, and the method comprises performing the lubrication cycle during a single engine revolution.

5. A method according to claim 4, wherein the lubrication cycle comprises a first injection when the piston of the engine passes the injection nozzle (251) in a first direction and a second injection when the piston of the engine passes the injection nozzle in the opposite direction during a single engine revolution.

6. A method according to any preceding claim, wherein the method comprises, if the comparison indicates that the first volume is not less than the second volume, advancing the dosing plunger (21) by the linear actuator (2) over a distance that corresponds to the dosed quantity as determined by the local or central computer (253).

7. A method according to any preceding claim, wherein the cylinder lubrication apparatus (252) comprise a plunger connector (7) connected to a plurality of dosing plungers (21) and arranged to move said dosing plungers (21) simultaneously, wherein the linear actuator (2) is connected to said plunger connector (7) for driving said plurality of dosing plungers (21) simultaneously within the range of positions.

## Patentansprüche

1. Verfahren zum Betreiben einer Zylinderschmiervorrichtung (252) für einen großen langsam laufenden Mehrzylinder-Zweitaktdieselmotor, der in jedem Zylinder (250) einen sich hin- und herbewegenden Kolben aufweist, der auf der Innenfläche der Zylinderlaufbuchse gleitet, wodurch die Zylinderschmiervorrichtung (252) der Innenfläche der Zylinderlaufbuchse eine dosierte Menge an Zylinderschmieröl während eines Schmierzyklus bereitstellt, wobei der Schmierzyklus pro Hin- und Herbewegung oder pro Anzahl an mehreren Hin- und Herbewegungen des Kolbens über eine Vielzahl von Einspritzdüsen (251) durchgeführt wird, die um den Umfang eines Zylinders (250) verteilt sind, wobei die Zylinderschmiervorrichtung (252) Folgendes umfasst:
- eine Vielzahl von Kolbenpumpen (10-21, 21a), wobei jede Kolbenpumpe einen Dosierkolben (21) aufweist, der in einem Dosierzylinder (21a) gleitend bewegbar ist, wobei jeder Dosierzylinder (21a) eine Einspritzkammer (19) in Fluidkommunikation mit einem Einspritzauslass (18) umfasst, wobei jeder Einspritzauslass (18) durch eine Leitung (110) mit einer Einspritzdüse (251) von einem der Zylinder (250) verbunden ist; wobei die Kolbenpumpe angeordnet ist, um das Volumen der Einspritzkammer (19) zu reduzieren, indem der Dosierkolben (21) vorgeschoben und dadurch Schmieröl aus der Einspritzkammer (19) durch den Einspritzauslass (18) zu der Einspritzdüse (251) gepumpt wird;
- einen Linearaktuator (2), der mit dem Dosierkolben (21) verbunden und konfiguriert ist, um den Dosierkolben (21) in aufeinanderfolgenden Teilhüben zwischen zwei konstruktionstechnisch bestimmten Endpositionen anzutreiben, wobei die erste der Endpositionen einem vollständig eingezogenen Dosierkolben (21) entspricht und die zweite der zwei Endpositionen einem vollständig vorgeschobenen Dosierkolben (21) entspricht;
- einen Sensor (3) zum Bestimmen der relativen Position des Dosierkolbens (21), wobei die relative Position die tatsächliche Position des Dosierkolbens (21) relativ zu den Endpositionen ist;
- einen lokalen oder zentralen Computer (253), der konfiguriert ist, um Sensordaten von dem Sensor (3) zu empfangen, wobei die Sensordaten die relative Position des Dosierkolbens (21) angeben und eindeutig ausdrücken; wobei der lokale oder zentrale Computer (253) ferner konfiguriert ist, um Motordaten von Überwachungseinheiten (255, 256, 257, 258) zu empfangen, wobei die Motordaten die tatsächlichen Betriebsbedingungen des Motors angeben;
- wobei das Verfahren umfasst, dass der Linearaktuator (2) durch den lokalen oder zentralen Computer (253) angewiesen wird, den Dosierkolben (21) von der ersten Endposition in Richtung der zweiten Endposition in einer Vielzahl von aufeinanderfolgenden Teilhüben zu bewegen und den Dosierkolben (21) erst einzuziehen, nachdem die Vielzahl von aufeinanderfolgenden Teilhüben durchgeführt worden ist, um dadurch eine Anzahl an Schmierölportionen in den Zylinder (250) über eine Vielzahl von Motorumdrehungen vor dem Einziehen des Dosierkolbens (21) einzuspritzen;
**dadurch gekennzeichnet, dass** das Verfahren ferner Folgendes umfasst:
Empfangen der Sensordaten und der Motordaten durch den lokalen oder zentralen Computer (253);
auf der Grundlage der empfangenen Sensordaten Bestimmen eines ersten Parameters, der ein erstes Volumen angibt und eindeutig ausdrückt, das ein Volumen von Schmieröl ist, das in der Einspritzkammer (19) zum potentiellen Pumpen durch den entsprechenden Dosierkolben (21) übrig ist; auf der Grundlage der empfangenen Motordaten Bestimmen eines zweiten Parameters, der ein zweites Volumen angibt und eindeutig ausdrückt, das die dosierte Menge an Schmieröl ist, die durch den lokalen oder zentralen Computer zum Einspritzen in den Zylinder (250) durch die Düse (251) bestimmt wird; wobei der lokale oder zentrale Computer den ersten Parameter automatisch mit dem zweiten Parameter vergleicht, und wenn der Vergleich angibt, dass das erste Volumen weniger als ein Schwellenvolumen ist, Anweisungen von dem lokalen oder zentralen Computer bewirken, dass der Linearaktuator (2) den Dosierkolben (21) einzieht und dadurch Erhöhen des Volumens an Schmieröl in der Einspritzkammer (19) vor dem Einspritzen des zweiten Volumens in den Zylinder (250);
wobei das Verfahren, wenn der Vergleich angibt, dass das erste Volumen weniger als das zweite Volumen, aber nicht weniger als das Schwellenvolumen ist, wobei das Schwellenvolumen mehr als 50 %, aber weniger als 100 % des zweiten Volumens ist, Vorschieben des Dosierkolbens (21) durch den Linearaktuator (2) bis zu der zweiten Endposition und anschließendes Einziehen des Dosierkolbens (21) umfasst.

2. Verfahren nach Anspruch 1, wobei das Schwellenvolumen zumindest 80 % des zweiten Volumens ist.

3. Verfahren nach einem vorhergehenden Anspruch, wobei ein Schmierzyklus mehrere Einspritzungen umfasst; wobei das zweite Volumen die dosierte Menge an Schmieröl ist, die insgesamt für mehrfache Einspritzung in den Zylinder (250) pro Schmierzyklus erwünscht ist.

4. Verfahren nach Anspruch 3, wobei sich ein Schmierzyklus auf eine einzelne Motorumdrehung bezieht und das Verfahren das Durchführen des Schmierzyklus während einer einzelnen Motorumdrehung umfasst.

5. Verfahren nach Anspruch 4, wobei der Schmierzyklus eine erste Einspritzung, wenn der Kolben des Motors die Einspritzdüse (251) in einer ersten Richtung passiert, und eine zweite Einspritzung umfasst, wenn der Kolben des Motors die Einspritzdüse in der entgegengesetzten Richtung während einer einzelnen Motorumdrehung passiert.

6. Verfahren nach einem vorhergehenden Anspruch, wobei das Verfahren, wenn der Vergleich angibt, dass das erste Volumen nicht weniger als das zweite Volumen ist, das Vorschieben des Dosierkolbens (21) durch den Linearaktuator (2) über eine Distanz umfasst, die der dosierten Menge wie durch den lokalen oder zentralen Computer (253) bestimmt entspricht.

7. Verfahren nach einem vorhergehenden Anspruch, wobei die Zylinderschmiervorrichtung (252) einen Kolbenverbinder (7) umfasst, der mit einer Vielzahl von Dosierkolben (21) verbunden und angeordnet ist, um die Dosierkolben (21) gleichzeitig zu bewegen, wobei der Linearaktuator (2) mit dem Kolbenverbinder (7) verbunden ist, um die Vielzahl von Dosierkolben (21) gleichzeitig innerhalb der Spanne an Positionen anzutreiben.

## Revendications

1. Procédé de fonctionnement d'un appareil de lubrification de cylindre (252) pour un gros moteur multicylindre diesel lent à deux temps ayant dans chaque cylindre (250) un piston alternatif qui coulisse sur la surface intérieure de la chemise de cylindre, moyennant quoi l'appareil de lubrification de cylindre (252) fournit à ladite surface intérieure de la chemise de cylindre une quantité dosée d'huile de lubrification de cylindre pendant un cycle de lubrification, le cycle de lubrification étant effectué par mouvement alternatif ou par nombre de multiples mouvements alternatifs dudit piston via une pluralité de buses d'injection (251) qui sont réparties autour de la circonférence d'un cylindre (250), ledit appareil de lubrification de cylindre (252) comprend :
- une pluralité de pompes à piston (10-21, 21a), chaque pompe à piston ayant un piston doseur (21) mobile de manière coulissante dans un cylindre doseur (21a), chaque cylindre doseur (21a) comprenant une chambre d'injection (19) en communication fluidique avec une sortie d'injection (18), chaque sortie d'injection (18) étant reliée par un conduit (110) à une buse d'injection (251) de l'un des cylindres (250) ; la pompe à piston étant agencée pour réduire le volume de la chambre d'injection (19) en faisant avancer le piston doseur (21) et en pompant ainsi de l'huile de lubrification depuis la chambre d'injection (19) à travers la sortie d'injection (18) vers la buse d'injection (251) ;
- un actionneur linéaire (2) relié audit piston doseur (21) et conçu pour entraîner ledit piston doseur (21) en courses partielles successives entre deux positions extrêmes déterminées par la construction, la première des positions extrêmes correspondant à un piston doseur (21) complètement rétracté et la seconde des deux positions extrêmes correspondant à un piston doseur (21) complètement avancé ;
- un capteur (3) pour déterminer la position relative du piston doseur (21), la position relative étant la position réelle du piston doseur (21) par rapport aux positions extrêmes ;
- un ordinateur local ou central (253) conçu pour recevoir des données de capteur depuis le capteur (3), les données de capteur indiquant et exprimant de manière unique la position relative du piston doseur (21) ; l'ordinateur local ou central (253) étant en outre conçu pour recevoir des données de moteur depuis des unités de surveillance (255, 256, 257, 258), les données de moteur indiquant des conditions de fonctionnement réelles du moteur ;
- ledit procédé comprend le fait d'ordonner audit actionneur linéaire (2) par ledit ordinateur local ou central (253) de déplacer ledit piston doseur (21) depuis la première position extrême vers la seconde position extrême en une pluralité de courses partielles successives et de rétracter le piston doseur (21) seulement après avoir effectué la pluralité de courses partielles successives pour injecter ainsi un nombre de portions d'huile de lubrification dans le cylindre (250) sur une pluralité de tours moteur avant la rétraction du piston doseur (21) ;
**caractérisé en ce que** le procédé comprend en outre :
l'ordinateur local ou central (253) recevant les données de capteur et les données de moteur ;
sur la base des données de capteur reçues, la détermination d'un premier paramètre indiquant et exprimant de manière unique un premier volume, qui est un volume d'huile de lubrification qui est laissé dans la chambre d'injection (19) pour un pompage potentiel par le piston doseur (21) correspondant ; sur la base des données de moteur reçues, la détermination d'un second paramètre indiquant et exprimant de manière unique un second volume qui est la quantité dosée d'huile de lubrification déterminée par l'ordinateur local ou central pour une injection dans le cylindre (250) à travers la buse (251) ; l'ordinateur local ou central comparant automatiquement le premier paramètre avec le second paramètre, et si la comparaison indique que le premier volume est inférieur à un volume seuil, des instructions de l'ordinateur local ou central amenant l'actionneur linéaire (2) à rétracter le piston doseur (21) et augmentant ainsi le volume d'huile de lubrification dans la chambre d'injection (19) avant l'injection du second volume dans le cylindre (250) ;
dans lequel le procédé comprend, si la comparaison indique que le premier volume est inférieur au second volume mais pas inférieur au volume seuil, dans lequel le volume seuil est supérieur à 50 % mais inférieur à 100 % du second volume, l'avancement du piston doseur (21) par l'actionneur linéaire (2) jusqu'à la seconde position extrême et la rétraction ensuite du piston doseur (21).

2. Procédé selon la revendication 1, dans lequel le volume seuil est d'au moins 80 % du second volume.

3. Procédé selon une quelconque revendication précédente, dans lequel un cycle de lubrification comprend de multiples injections ; dans lequel le second volume est la quantité dosée d'huile de lubrification qui au total est souhaitée pour une injection multiple dans le cylindre (250) par cycle de lubrification.

4. Procédé selon la revendication 3, dans lequel un cycle de lubrification est lié à un seul tour moteur, et le procédé comprend la réalisation du cycle de lubrification pendant un seul tour moteur.

5. Procédé selon la revendication 4, dans lequel le cycle de lubrification comprend une première injection lorsque le piston du moteur passe la buse d'injection (251) dans une première direction et une seconde injection lorsque le piston du moteur passe la buse d'injection dans la direction opposée pendant un seul tour moteur.

6. Procédé selon une quelconque revendication précédente, dans lequel le procédé comprend, si la comparaison indique que le premier volume n'est pas inférieur au second volume, l'avancement du piston doseur (21) par l'actionneur linéaire (2) sur une distance qui correspond à la quantité dosée telle que déterminée par l'ordinateur local ou central (253).

7. Procédé selon une quelconque revendication précédente, dans lequel l'appareil de lubrification de cylindre (252) comprend un connecteur de piston (7) relié à une pluralité de pistons doseurs (21) et agencé pour déplacer lesdits pistons doseurs (21) simultanément, dans lequel l'actionneur linéaire (2) est relié audit connecteur de piston (7) pour entraîner ladite pluralité de pistons doseurs (21) simultanément dans les limites de la plage de positions.
